# EUROPÄISCHE PATENTSCHRIFT

(11) **EP 2 582 640 B1**
(45) Veröffentlichungstag und Bekanntmachung des Hinweises auf die Patenterteilung: **23.08.2017**
(21) Anmeldenummer: 11746435.4
(22) Anmeldetag: 20.06.2011
(51) Int. Cl.: C03C 17/09, C03C 17/34, C03C 17/36, F23M 5/00, F27D 1/00

(54) **AUSKLEIDUNGS- ODER REFLEKTORMATERIAL FÜR HOCHTEMPERATURANWENDUNGEN**
LINING- OR REFRLECTOR MATERIAL FOR USE IN HIGH TEMPERATURES
MATÉRIAU DU REVÊTEMENT OU RÉFLECTEUR POUR L' APPLICATION À HAUTE TEMPÉRATURE

(30) Priorität: 21.06.2010 DE 102010024495
(43) Veröffentlichungstag der Anmeldung: 24.04.2013
(73) Patentinhaber: Schott AG, 55122 Mainz (DE)
(72) Erfinder: HENN, Christian, 55546 Frei-Laubersheim (DE); RUDIGIER-VOIGT, Eveline, 55128 Mainz (DE); LEROUX, Roland, 55271 Stadecken-Elsheim (DE); GABEL, Falk, 65388 Schlangenbad (DE)
(74) Vertreter: Herden, Andreas F.
(86) Internationale Anmeldenummer: PCT/EP2011/003038
(87) Internationale Veröffentlichungsnummer: WO 2011/160802

(56) Entgegenhaltungen:
- EP-A1- 2 141 135
- EP-A1- 2 243 750
- FR-A1- 2 939 788

## Beschreibung

### Gebiet der Erfindung:

Die Erfindung betrifft ein Auskleidungs- oder Reflektormaterial für Hochtemperaturanwendungen sowie ein Verfahren zu dessen Herstellung. Insbesondere betrifft die Erfindung ein Auskleidungsmaterial für Hochtemperaturanwendungen, welches einer chemisch aggressiven Atmosphäre ausgesetzt ist.

### Hintergrund der Erfindung:

Die Herstellung von Dünnschicht-Solarzellen bzw. Modulen auf Verbundhalbleiter-Basis ist in ihrem Kernprozess, der Absorberherstellung, häufig mit Temperaturen von 400 bis 800 °C unter Selen- und/oder Schwefel-haltiger Atmosphäre verbunden. Die Beheizung derartiger Anlagen erfolgt in der Regel mittels keramischer Heizelemente. Insbesondere im Bereich dieser Heizelemente sind die Temperaturen der Anlage besonders hoch, so dass es hier verstärkt zu korrosiven Angriffen des Heizelementes selbst oder der Auskleidung, welche an das Heizelement angrenzt, kommen kann.

In der Praxis wird als Auskleidungsmaterial in der Regel Edelstahl oder Keramik verwendet. Es hat sich gezeigt, dass diese Materialien im Zusammenspiel korrosiver Angriff und hoher Temperatur in regelmäßigen Abständen ausgetauscht werden müssen und mithin als Verbrauchsmaterial zu sehen sind.

Es werden somit nicht nur hohe Kosten durch den erforderlichen Austausch des Auskleidungsmaterials verursacht, sondern es kann aufgrund des korrosiven Angriffs und der damit einhergehenden Zersetzung des Auskleidungsmaterials auch zu Verunreinigungen der hergestellten Halbleiter-Bauelemente, wie beispielsweise Absorberschichten von Solarzellen kommen.

Das Dokument EP 2 141 135 A1 zeigt eine Sichtscheibe für Kaminöfen mit einer Wärmestrahlung reflektierenden ITO-Schicht sowie eine auf diese Schicht aufgebrachten Barriereschicht.

### Aufgabe der Erfindung:

Der Erfindung liegt dem gegenüber die Aufgabe zugrunde, ein Auskleidungs- oder Reflektormaterial bereitzustellen, bei dem die genannten Nachteile des Standes der Technik reduziert sind.

Insbesondere ist es eine Aufgabe der Erfindung, ein Auskleidungs- oder Reflektormaterial bereitzustellen, welches die Eigenschaft aufweist, Infrarotstrahlung zu reflektieren, und welches gegenüber bekannten Auskleidungsmaterialien eine erhöhte Beständigkeit aufweist.

### Zusammenfassung der Erfindung:

Die Aufgabe der Erfindung wird bereits durch ein Auskleidungs- oder Reflektormaterial für Hochtemperaturanwendungen sowie durch ein Verfahren zur Herstellung eines Auskleidungs- oder Reflektormaterials nach einem der unabhängigen Ansprüche gelöst.

Besondere Ausführungsformen und Weiterbildungen der Erfindung sind den jeweiligen Unteransprüchen zu entnehmen.

Die Erfindung betrifft ein Auskleidungs- oder Reflektormaterial für Hochtemperaturanwendungen, welches insbesondere für Öfen vorgesehen ist.

Unter Hochtemperaturanwendungen werden Einsatztemperaturen von über 200 °C, vorzugsweise von über 400 °C verstanden.

Das erfindungsgemäße Material ist sowohl als Auskleidungsmaterial, beispielsweise in Form von Scheiben oder Kacheln, mit denen die Wand einer Anlage belegt wird, vorgesehen, als auch als Reflektormaterial, beispielsweise zur Auskleidung eines keramischen Heizstrahlers.

Es versteht sich, dass dieses Material sowohl in planer Ausführung, als auch in gebogener Form oder in Form eines beispielsweise parabolisch ausgebildeten Reflektors bereitgestellt werden kann. Ebenso kann das Material auch Aussparungen aufweisen, wie beispielsweise Bohrlöcher, Durchführungen oder ähnliches.

Das Material weist vorzugsweise eine Dicke von größer 1 mm auf, besonders bevorzugt eine Dicke von 1,5 bis 2 mm.

Das erfindungsgemäße Auskleidungs- oder Reflektormaterial umfasst ein Glaskeramiksubstrat. Es handelt sich dabei um ein sogenanntes Null-Ausdehnungsmaterial, welches zur Verwendung im Hochtemperaturbereich geeignet ist.

Beispielsweise kann eine Glaskeramik mit folgender Zusammensetzung verwendet werden:

| | | |
|---|---|---|
| 60 - 73,0 | Ges.-%, | vorzugsweise 50 - 75 Gew.% SiO₂ |
| 15 - 25,0 | Ges.-% | Al₂O₃, |
| 2,2 - 5,0 | Gew.-% | Li₂O, |
| 0 - 5,0 | Ges.-% | CaO + SrO + BaO, |
| 0 - 5,0 | Ges.-% | TiO₂, |
| 0 - 5,0 | Gew.-% | ZrO₂, |
| 0 - 4,0 | Gew.-% | ZnO, |
| 0 - 3,0 | Ges.-% | Sb₂O₃, |
| 0 - 3,0 | Gew.-% | MgO, |
| 0 - 3,0 | Ges.-% | SnO₂, |
| 0 - 2,0 | Ges.-% | P₂O₅, |
| 0 - 1,5 | Ges.-% | As₂O₃ , |
| 0 - 1,2 | Ges.-% | Na₂O + K₂O, wobei die jeweiligen |
| | Anteile innerhalb der nachfolgend angegebenen Bereiche liegen: | |
| 0 - 1,0 | Gew.-% | Na₂O, |
| 0 - 0,5 | Gew.-% | K₂O und |
| 0 - 1,0 | Gew.-% | färbende Oxide, |

optional Läutermittel wie Sb₂O₃, As₂O₃, SnO₂, Ce₂O₃, Fluor und/oder Brom.

Auf dem Glaskeramiksubstrat ist eine die Infrarotstrahlung reflektierende Schicht aufgebracht. Diese Beschichtung ermöglicht es zum einen, das erfindungsgemäße Material als Reflektormaterial zur Auskleidung eines beispielweise keramischen Strahlers zu verwenden, zum anderen kann das erfindungsgemäße Material auch zur Auskleidung der gesamten Anlage, vorzugsweise eines Ofens, verwendet werden. Hier ist es von Vorteil, dass bei bestehenden Anlagen die Heizleistung der Keramikstrahler durch die in den Innenraum reflektierte IR-Strahlung abgesenkt werden kann, ohne dass der Energieeintrag in die herzustellenden Bauelemente reduziert wird.

Aufgrund der somit verringerten Heizleistung weisen Keramikstrahler eine signifikant erhöhte Lebensdauer auf.

Unter einer Infrarotstrahlung reflektierenden Schicht wird eine Schicht verstanden, deren Material die Eigenschaft hat, in einem Wellenlängenbereich von 1100 bis 2000 nm einen Reflektionsgrad von 50% oder mehr aufzuweisen.

Weiter ist auf der reflektierenden Schicht eine Barriereschicht als Schutz gegenüber Oxidation oder chemischem Angriff aufgebracht. Diese Barriereschicht schützt also die Infrarotstrahlung reflektierende Schicht und/oder das Substrat vor Oxidation und korrosivem Angriff.

Die Barriereschicht ist für Strahlung im Infrarotbereich im Wesentlichen durchlässig. So beträgt das Verhältnis des Reflektionsgrads der Infrarot-Stahlung reflektierenden Schicht zu der Barriereschicht im Wellenlängenbereich zwischen 800 und 2000 nm im Mittel mehr als 2, vorzugsweise mehr als 3 und besonders bevorzugt mehr als 5. Beim beanspruchten Material beträgt das Verhältnis des Reflektionsgrads der Infrarot-Stahlung reflektierenden Schicht zu der Barriereschicht im gesamtem Wellenlängenbereich zwischen 1100 und 2000 nm, bevorzugt zwischen 800 und 2000 nm, mehr als 2, vorzugsweise mehr als 3 und besonders bevorzugt mehr als 5.

Für die Barriereschicht können Materialien verwendet werden, welche im Infraroten zwar nur einen geringen Reflexionsgrad aufweisen, gegenüber chemischen Angriffen bei hoher Temperatur aber eine gute Beständigkeit aufweisen.

Das erfindungsgemäße Material ist inert und gibt insbesondere keine Halbleitergifte in die Ofenatmosphäre ab. Dies gilt vorzugsweise ebenso für das die Infrarotstrahlung reflektierende Material als auch für die darüber angeordnete Barriereschicht. Aufgrund der genannten Barriereschicht ist die Beständigkeit des erfindungsgemäßen Materials auch bei Hochtemperaturanwendungen in chemisch aggressiver Atmosphäre wesentlich erhöht, so dass dessen Einsatzzeit gegenüber herkömmlichen Materialien verlängert werden kann und die Abstände der Servicezeit, d.h. der Zeitspanne bis zum Austausch des Auskleidungsmaterials, deutlich erhöht werden können.

Vorzugsweise ist die Infrarotstrahlung reflektierende Schicht direkt auf dem Keramiksubstrat und die Barriereschicht direkt auf der die Infrarotstrahlung reflektierenden Schicht angeordnet. Es versteht sich aber, dass das erfindungsgemäße Material noch weitere Schichten umfassen kann, beispielsweise Zwischenschichten, welche der besseren Anhaftung der Schichten dienen.

Vorzugsweise bildet die Barriereschicht die äußerste Schicht einer Verbundkomponente, bestehend aus Verbundmaterial und darauf aufgebrachten Schichten.

Bei einer bevorzugten Ausführungsform der Erfindung umfasst die Barriereschicht ein Nitrid, insbesondere besteht die Barriereschicht im Wesentlichen aus einem Nitrid.

Die Erfinder haben herausgefunden, dass Nitridschichten eine besonders gute Barrierewirkung bei hohen Temperaturen und chemischen Angriffen, insbesondere durch Sauerstoff, Schwefel oder Selen haben. Als Barriereschichten werden in der Regel Schichten mit einem Porositätsgrad von weniger als 1% (errechnete Porosität) verwendet.

Üblicherweise bietet sich ein Oxid, insbesondere Siliziumoxid als geeignetes Material für Barriereschichten bei den genannten korrosiven Materialien an. Die Erfinder haben aber herausgefunden, dass oxidische Schichten, insbesondere solche aus Siliziumoxid, dazu führen, dass das System insbesondere bei Temperaturen größer 700 °C degradiert, wohingegen bei der Verwendung einer Nitridschicht sich die Infrarotstrahlung reflektierenden Eigenschaften auch bei einer thermischen Belastung von 700°C und größer nur unwesentlich ändern.

Insbesondere ist die Verwendung Siliziumnitrid, Siliziumoxinitrid, Aluminiumnitrid, Titanaluminiumnitrid und/oder Zirkonnitrid vorgesehen.

Gemäß der Erfindung wird als Infrarotstrahlung reflektierende Schicht Titannitrid verwendet.

Titannitrid ist ein inertes Material, welches Schichtdicken-abhängig ab dem sichtbaren Spektralbereich, d.h. ab einer Wellenlänge von 500 nm, Strahlung reflektieren kann. Im Infraroten kann der Reflektionsgrad 70 bis 80% erreichen.

Die Infrarotstrahlung reflektierende Schicht weist bei einer bevorzugten Ausführungsform der Erfindung eine Dicke zwischen 20 und 500 nm, vorzugsweise zwischen 50 und 200 nm, auf.

Es hat sich gezeigt, dass bereits eine 100 nm dicke Schicht ausreicht, um einen Reflektionsgrad im Infraroten von etwa 70% zu erreichen.

Noch dickere Schichten, beispielsweise von 400 nm und mehr, führen zu einem nochmals verbesserten Reflektionsgrad von etwa 80%, sind aber naturgemäß in der Herstellung wesentlich aufwendiger und mit höheren Kosten verbunden.

Die Barriereschicht kann eine Dicke zwischen 5 und 500 nm, vorzugsweise zwischen 20 und 100 nm, aufweisen. Es hat sich gezeigt, dass bereits relativ dünne Nitridschichten von beispielsweise 30 nm die darunter liegende Infrarotstrahlung reflektierende Schicht ausreichend vor korrosiven Angriffen schützen, ohne dabei die optischen Eigenschaften einer TiN-Schicht im Infraroten zu beeinflussen.

Durch die Erfindung kann ein Auskleidungs- oder Reflektormaterial bereitgestellt werden, welches auch nach einer Temperaturbelastung von mindestens 700 °C über 24 Stunden im Infrarot-Wellenlängenbereich, insbesondere ca. 1100 bis 2000 nm, einen Reflektionsgrad von über 50% aufweist.

Erstaunlicherweise zeigte sich, dass durch die Verwendung eines Glaskeramiksubstrats mit einer Titannitridschicht sich ein Auskleidungsmaterial für Hochtemperaturanwendungen, insbesondere bei der Produktion von Halbleiterbauelementen, bereitstellen lässt, durch das die Heizleistung, welche für den Betrieb einer derartigen Anlage erforderlich ist, reduziert werden kann.

Die Erfindung betrifft des Weiteren die Verwendung eines zuvor beschriebenen Auskleidungs- oder Reflektormaterials in einer korrosiven Atmosphäre von Temperaturen über 400°C, vorzugsweise über 550 °C.

Insbesondere wird das Auskleidungs- oder Reflektormaterial in einer Chalcogen-haltigen, wie beispielsweise Schwefel und/oder Selen, Atmosphäre verwendet, wie sie beispielsweise bei der Produktion von Dünnschichtsolarzellen auf Verbundhalbleiter-Basis verwendet wird.

Die Erfindung betrifft des Weiteren ein Verfahren zur Herstellung eines Auskleidungs- oder Reflektormaterials. Dabei wird zunächst ein Glaskeramiksubstrat bereitgestellt und auf dieses Glaskeramiksubstrat eine Infrarotstrahlung reflektierende Titannitridschicht abgeschieden.

Das Abscheiden erfolgt mittels eines PVD- oder CVD-Verfahrens, vorzugsweise mittels eines Sputterverfahrens, besonders geeignet ist die Magnetron-Sputtertechnologie.

Bei einer Weiterbildung der Erfindung wird die Nitridschicht in einem Vakuumprozess bei einer Substrattemperatur von über 300 °C abgeschieden.

Erstaunlicherweise zeigte sich, dass so eine dichte, d.h. eine geringe Porosität aufweisende, Schichtstruktur entsteht, in welche nur wenige Fremdstoffe, insbesondere Sauerstoff, eindiffundieren können. Die Nitridschicht hat vorzugsweise einen Porositätsgrad (errechnete Porosität) von weniger als 1%.

Vorzugsweise erfolgt das Abscheiden bei hoher Ionenenergie, auf die Targetfläche des zu sputternden Materials bezogen, von größer als 5 W/cm², bevorzugt größer als 15 W/cm².

Bei einer Weiterbildung der Erfindung wird auf der Nitridschicht eine Barriereschicht abgeschieden, insbesondere eine Barriereschicht wie zuvor beschrieben.

Das Abscheiden der Barriereschicht erfolgt mittel PVD-, CVD- Verfahren oder, insbesondere im Falle einer Oxidenthaltenden Schicht, über die Flüssigphase, vorzugsweise ebenfalls mittels eines Sputterverfahrens und vorzugsweise bei einer Substrattemperatur von über 200 °C, besonders bevorzugt über 350 °C.

Als Barriereschicht wird vorzugsweise eine Nitridschicht verwendet. Es versteht sich, dass es sich dabei nicht um die gleiche Nitridschicht handelt, welche zur Reflektion von Infrarotstrahlung verwendet wird, wie beispielsweise Titannitrid, sondern dass es sich um eine in der Regel gegenüber Infrarotstrahlung transparentere Schicht aus einem Nitrid oder Oxinitrid handelt, d.h. mit einem im IR-Wellenlängenbereich signifikant niedrigerem Reflektionsgrad, insbesondere mindestens 10% niedriger, besonders bevorzugt 40% niedriger als die die IR-Strahlung reflektierende Schicht. Die Barriereschicht umfasst ein weiteres, von der IR-reflektierenden Schicht verschiedenes Element.

### Kurzbeschreibung der Zeichnungen:

Die Erfindung soll im Folgenden Bezug nehmend auf schematisch dargestellte Ausführungsbeispiele und anhand der Zeichnungen Fig. 1 bis Fig. 3 erläutert werden.
Fig. 1 zeigt, schematisch dargestellt, ein Auskleidungs- oder Reflektormaterial.
Fig. 2 zeigt ein Flussdiagramm, wie ein erfindungsgemäßes Reflektormaterial hergestellt wird.
Fig. 3 zeigt Reflexionskurven verschiedener Auskleidungsmaterialien in einem Wellenlängenbereich zwischen 800 und 2000 nm.

### Detaillierte Beschreibung der Zeichnungen:

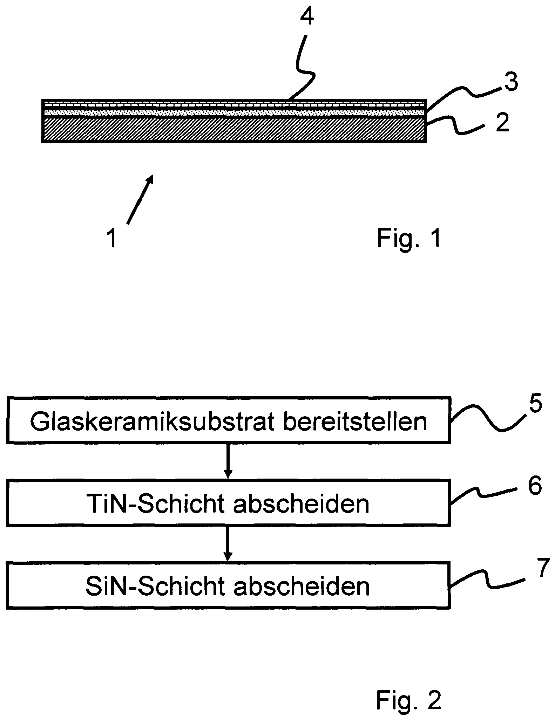

Fig. 1 zeigt, schematisch dargestellt, ein Auskleidungs- oder Reflektormaterial 1.

Das Auskleidungs- oder Reflektormaterial 1 umfasst ein Glaskeramiksubstrat 2. In diesem Ausführungsbeispiel ist das Glaskeramiksubstrat 2 als plane Scheibe ausgebildet und somit insbesondere zur Auskleidung einer Anlage vorgesehen. Auf dem Glaskeramiksubstrat 2 ist eine etwa 100 nm dicke Titannitridschicht abgeschieden, welche als Infrarotstrahlung reflektierende Schicht dient. Zum Schutz der Titannitridschicht 3 ist auf die Titannitridschicht 3 eine etwa 30 nm dicke Barriereschicht 4 aus Siliziumnitrid abgeschieden.

Das so bereitgestellte Verbundmaterial gewährleistet so in einem Wellenlängenbereich zwischen 1100 und 2000 nm stets eine Reflektion von mindestens 50% und eignet sich auch zum Hochtemperatureinsatz bei Temperaturen von 400 °C und höher und zum Einsatz in chemisch korrosiver Atmosphäre.

Fig. 2 zeigt ein Flussdiagramm, wie das Auskleidungs- oder Reflektormaterial hergestellt wird.

Zunächst wird ein Glaskeramiksubstrat, beispielsweise in Form einer Glaskeramikscheibe, bereitgestellt 5. Sodann wird, insbesondere mittels eines Magnetron-Sputterverfahrens, eine Titannitridschicht abgeschieden 6.

Das Abscheiden der Titannitridschicht erfolgt im Vakuum bei Substrattemperaturen von über 350 °C. So wird erreicht, dass eine dichte, d.h. eine geringe Porosität aufweisende, Titannitridschicht entsteht. Dadurch wird die Eindiffusion von Fremdatomen beziehungsweise -ionen, insbesondere Sauerstoff, in den nachfolgenden Prozessen, insbesondere bei Temperaturen über 400 °C, in diese Schicht stark reduziert. Die Eindiffusion von Sauerstoff in die Titannitridschicht hätte die die Folge, dass sich beispielsweise deren reflektierende Eigenschaften signifikant verschlechtern würden.

Sodann wird auf die Titannitridschicht eine Siliziumnitridschicht abgeschieden 7, welche als Barriereschicht vorgesehen ist.

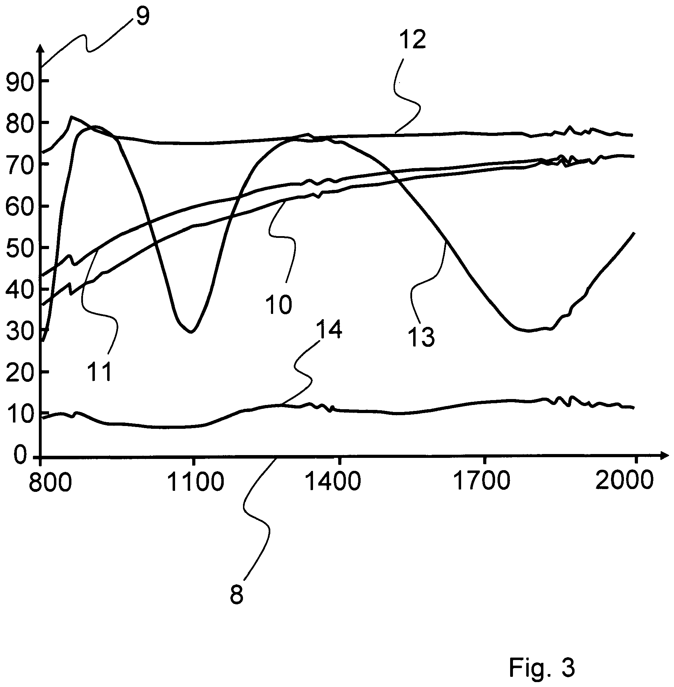

Fig. 3 zeigt die Reflektion verschiedener Auskleidungs- oder Reflektormaterialien, wobei die Wellenlänge in nm (x-Achse 8) gegen den Reflektionsgrad in % (y-Achse 9) aufgetragen ist.

Kurve 10 zeigt den Reflektionsverlauf des zuvor beschriebenen Auskleidungs- oder Reflektormaterials mit einer Titannitridschicht, auf der sich als Barriereschicht eine Siliziumnitridschicht befindet.

Die Kurve 10 zeigt den Reflektionsverlauf dieses Materials im Ausgangszustand, wohingegen die Kurve 11 den Reflektionsverlauf des Materials zeigt, welches über 24 Stunden einer Temperatur von über 700 °C ausgesetzt wurde.

Zu erkennen ist, dass der Reflektionsgrad bei einer Wellenlänge von 1100 nm bei über 50% liegt und bis 2000 nm kontinuierlich auf etwa 70% ansteigt.

Des Weiteren ist zu erkennen, dass sich der Reflektionsgrad der temperaturbehandelten Schicht 11 sogar noch gegenüber dem Ausgangszustand leicht verbessert hat. Die Bandkante des Materials verschiebt sich durch eine solche Temperaturbehandlung nicht, d.h. die Reflektionseigenschaften des Materials bleiben - abgesehen von der oben erwähnten leichten Verbesserung durch eine Verdichtung der Schicht - auch bei hohen Temperaturen erhalten, was für dieses Material eine notwendige Bedingung für eine Anwendung als Auskleidungsmaterial ist und es dafür prädestiniert.

Der hier gezeigte Verlauf wurde nach thermischer Behandlung des Materials bei Atmosphäre (Luft) aufgenommen, das erfindungsgemäße Material ist insbesondere auch zum Einsatz in chemisch aggressiven Atmosphären geeignet.

Kurve 12 zeigt den Reflektionsverlauf eines Auskleidungs- oder Reflektormaterials, welches lediglich mit einer Titannitridschicht versehen ist.

Zu erkennen ist, dass der Reflektionsgrad gegenüber den Kurven 10 und 11 etwas höher liegt, bereits bei 800 nm mehr als 70% erreicht und bis zu 2000 nm stets über 70% liegt.

Kurve 13 zeigt den Reflektionsverlauf dieses Materials, nachdem es über 14 Stunden einer Temperatur von 500 °C bei Atmosphäre ausgesetzt wurde.

Zu erkennen ist, dass die Schicht aufgrund der fehlenden Barriereschicht deutlich degradiert ist und der Reflektionsgrad bei einer Wellenlänge von 1100 nm bei lediglich 30%liegt.

Dieses Material ohne Barriereschicht eignet sich somit weniger für Hochtemperaturanwendungen in korrosiver Atmosphäre.

Kurve 14 zeigt den Reflektionsverlauf eines Auskleidungsmaterials mit einer Titannitridschicht als Infrarotstrahlung reflektierende Schicht, auf welcher eine Siliziumoxidschicht aufgebracht wurde, nach einer Temperaturbelastung von 700 °C über 24 Stunden.

Zu erkennen ist, dass das System keine hinreichende Wirkung mehr zeigt. Der Reflektionsgrad liegt im gesamten Wellenlängebereich zwischen 800 und 2000 nm lediglich bei etwa 10%. Siliziumoxid ist somit als Barriereschicht für Hochtemperaturanwendungen auf Titannitrid, insbesondere bei korrosiver Atmosphäre ungeeignet.

Durch die Erfindung kann ein hochtemperaturfestes Auskleidungs- oder Reflektormaterial bereitgestellt werden, welches auch in chemisch aggressiver Atmosphäre beständig ist.

### Bezugszeichenliste:

- 1: Auskleidungs- oder Reflektormaterial
- 2: Glaskeramiksubstrat
- 3: Titannitridschicht
- 4: Barriereschicht
- 5: Glaskeramiksubstrat bereitstellen
- 6: Titannitridschicht abscheiden
- 7: Siliziumnitridschicht abscheiden
- 8: x-Achse
- 9: y-Achse
- 10-14: Reflektionsverläufe

## Patentansprüche

1. Auskleidungs- oder Reflektormaterial für Hochtemperaturanwendungen, insbesondere für Öfen, umfassend ein Glaskeramiksubstrat, welches eine Infrarot-Strahlung reflektierende Schicht aufweist, welche Titannitrid umfasst, wobei auf der Infrarot-Strahlung reflektierenden Schicht eine Barriereschicht als Schutz gegenüber Oxidation und korrosivem chemischem Angriff angeordnet ist.

2. Auskleidungs- oder Reflektormaterial nach dem vorstehenden Anspruch, **dadurch gekennzeichnet, dass** die Barriereschicht ein Nitrid umfasst, insbesondere im Wesentlichen aus einem Nitrid besteht.

3. Auskleidungs- oder Reflektormaterial nach dem vorstehenden Anspruch, **dadurch gekennzeichnet, dass** die Barriereschicht Siliziumnitrid, Siliziumoxinitrid, Aluminiumnitrid, Titanaluminiumnitrid und/oder Zirkonnitrid umfasst.

4. Auskleidungs- oder Reflektormaterial nach einem der vorstehenden Ansprüche, **dadurch gekennzeichnet, dass** die Infrarot-Strahlung reflektierende Schicht aus Titannitrid besteht.

5. Auskleidungs- oder Reflektormaterial nach einem der vorstehenden Ansprüche, **dadurch gekennzeichnet, dass** die Infrarot-Strahlung reflektierende Schicht eine Dicke zwischen 20 und 500 nm, vorzugsweise zwischen 50 und 200 nm aufweist.

6. Auskleidungs- oder Reflektormaterial nach einem der vorstehenden Ansprüche, **dadurch gekennzeichnet, dass** die Barriereschicht eine Dicke zwischen 5 und 500 nm, vorzugsweise zwischen 20 und 100 nm aufweist.

7. Auskleidungs- oder Reflektormaterial nach einem der vorstehenden Ansprüche, **dadurch gekennzeichnet, dass** das Auskleidungs- oder Reflektormaterial nach einer Temperaturbelastung von mindestens 700 °C über 24 Stunden in einem Wellenlängenbereich von 1100 bis 2000 nm immer einen Reflexionsgrad von über 50 % aufweist.

8. Heizelement umfassend ein Auskleidungs- oder Reflektormaterial nach einem der vorstehenden Ansprüche.

9. Verwendung eines Auskleidungs- oder Reflektormaterials nach einem der vorstehenden Ansprüche in einer korrosiven Atmosphäre bei Temperaturen über 400 °C, insbesondere in einer Chalcogen-haltigen Atmosphäre.

10. Verfahren zur Herstellung eines Auskleidungs- oder Reflektormaterials, insbesondere eines Auskleidungs- oder Reflektormaterials nach einem der vorstehenden Ansprüche, umfassend die Schritte:
- Bereitstellen eines Glaskeramiksubstrats,
- Abscheiden einer Infrarot-Strahlung reflektierenden Titannitridschicht.

11. Verfahren zur Herstellung eines Auskleidungs- oder Reflektormaterials nach dem vorstehenden Anspruch, **dadurch gekennzeichnet, dass** die Nitridschicht in einem Vakuumprozess bei einer Substrattemperatur von über 200 °C, vorzugsweise über 350 °C abgeschieden wird.

12. Verfahren zur Herstellung eines Auskleidungs- oder Reflektormaterials nach dem vorstehenden Anspruch, **dadurch gekennzeichnet, dass** auf der Nitridschicht eine Barriereschicht abgeschieden wird.

## Claims

1. A lining or reflector material for high-temperature applications, in particular for furnaces, comprising a glass ceramic substrate having an infrared radiation reflecting layer that comprises titanium nitride, wherein a barrier layer is disposed on said infrared radiation reflecting layer as a protection against oxidation and corrosive chemical attack.

2. The lining or reflector material according to the preceding claim, **characterized in that** the barrier layer comprises a nitride, in particular substantially consists of a nitride.

3. The lining or reflector material according to the preceding claim, **characterized in that** the barrier layer comprises silicon nitride, silicon oxynitride, aluminium nitride, titanium aluminium nitride, and/or zirconium nitride.

4. The lining or reflector material according to any one of the preceding claims, **characterized in that** the infrared radiation reflecting layer consists of titanium nitride.

5. The lining or reflector material according to any one of the preceding claims, wherein the infrared radiation reflecting layer has a thickness between 20 and 500 nm, preferably between 50 and 200 nm.

6. The lining or reflector material according to any one of the preceding claims, wherein the barrier layer has a thickness between 5 and 500 nm, preferably between 20 and 100 nm.

7. The lining or reflector material according to any one of the preceding claims, wherein the lining or reflector material always exhibits reflectance of more than 50 % in a range of wavelengths from 1100 to 2000 nm after a temperature load of at least 700 °C for 24 hours.

8. A heating element, comprising a lining or reflector material according to any one of the preceding claims.

9. Use of a lining or reflector material according to any one of the preceding claims in a corrosive atmosphere at temperatures above 400 °C, in particular in a chalcogen-containing atmosphere.

10. A method for producing a lining or reflector material, in particular a lining or reflector material according to any one of the preceding claims, comprising the steps of:
- providing a glass ceramic substrate;
- depositing an infrared radiation reflecting titanium nitride layer.

11. The method for producing a lining or reflector material according to the preceding claim, **characterized in that** the nitride layer is deposited in a vacuum process at a substrate temperature of more than 200 °C, preferably more than 350 °C.

12. The method for producing a lining or reflector material according to the preceding claim, **characterized in that** a barrier layer is deposited on the nitride layer.

## Revendications

1. Matériau de revêtement ou réflecteur pour des applications haute température, en particulier pour des fours, comprenant un substrat en vitrocéramique, lequel présente une couche réfléchissant le rayonnement infrarouge, laquelle comporte du nitrure de titane, dans lequel une couche barrière utilisée comme protection contre l'oxydation et une attaque chimique corrosive est agencée sur la couche réfléchissant le rayonnement infrarouge.

2. Matériau de revêtement ou réflecteur selon la revendication précédente, **caractérisé en ce que** la couche barrière comprend un nitrure, en particulier est constituée essentiellement d'un nitrure.

3. Matériau de revêtement ou réflecteur selon la revendication précédente, **caractérisé en ce que** la couche barrière comprend du nitrure de silicium, de l'oxynitrure de silicium, du nitrure d'aluminium, du nitrure de titane-aluminium et/ou du nitrure de zirconium.

4. Matériau de revêtement ou réflecteur selon l'une quelconque des revendications précédentes, **caractérisé en ce que** la couche réfléchissant le rayonnement infrarouge est constituée de nitrure de titane.

5. Matériau de revêtement ou réflecteur selon l'une quelconque des revendications précédentes, **caractérisé en ce que** la couche réfléchissant le rayonnement infrarouge présente une épaisseur comprise entre 20 et 500 nm, de préférence entre 50 et 200 nm.

6. Matériau de revêtement ou réflecteur selon l'une quelconque des revendications précédentes, **caractérisé en ce que** la couche barrière présente une épaisseur comprise entre 5 et 500 nm, de préférence entre 20 et 100 nm.

7. Matériau de revêtement ou réflecteur selon l'une quelconque des revendications précédentes, **caractérisé en ce que** le matériau de revêtement ou réflecteur, après avoir été soumis à l'effet d'une température d'au moins 700°C pendant 24 heures dans une plage de longueurs d'ondes allant de 1100 à 2000 nm, présente toujours un degré de réflexion supérieur à 50 %.

8. Elément chauffant comprenant un matériau de revêtement ou réflecteur selon l'une quelconque des revendications précédentes.

9. Utilisation d'un matériau de revêtement ou réflecteur selon l'une quelconque des revendications précédentes, dans une atmosphère corrosive à des températures supérieures à 400°C, en particulier dans une atmosphère contenant du chalcogène.

10. Procédé de fabrication d'un matériau de revêtement ou réflecteur, en particulier d'un matériau de revêtement ou réflecteur selon l'une quelconque des revendications précédentes, comprenant les étapes suivantes :
- fournir un substrat en vitrocéramique,
- déposer une couche de nitrure de titane réfléchissant le rayonnement infrarouge.

11. Procédé de fabrication d'un matériau de revêtement ou réflecteur selon la revendication précédente, **caractérisé en ce que** la couche de nitrure est déposée au cours d'un procédé sous vide à une température de substrat supérieure à 200°C, de préférence supérieure à 350°C.

12. Procédé de fabrication d'un matériau de revêtement ou réflecteur selon la revendication précédente, **caractérisé en ce qu'**une couche barrière est déposée sur la couche de nitrure.
